# EUROPEAN PATENT SPECIFICATION

(11) **EP 0 798 959 B1**
(45) Date of publication and mention of the grant of the patent: **05.09.2001**
(21) Application number: 96932887.1
(22) Date of filing: 16.10.1996
(51) Int. Cl.: A01J 5/017

(54) **A METHOD OF AUTOMATICALLY MILKING ANIMALS AND AN IMPLEMENT FOR APPLYING SAME**
VERFAHREN ZUM AUTOMATISCHEN MELKEN VON TIEREN UND VORRICHTUNG ZU DEREN ANWENDUNG
PROCEDE DE TRAITE AUTOMATIQUE ET APPAREILLAGE D'EXECUTION

(30) Priority: 20.10.1995 NL 1001457
(43) Date of publication of application: 08.10.1997
(73) Proprietor: MAASLAND N.V., 3155 PD Maasland (NL)
(72) Inventor: VAN DER LELY, Ary, NL-3155 PD Maasland (NL)
(74) Representative: Corten, Maurice Jean F.M.
(86) International application number: NL9600401
(87) International publication number: WO9714297

(56) References cited:
- EP-A- 0 091 892
- EP-A- 0 639 327
- WO-A-95/35028

## Description

The present invention relates to a method of automatically milking animals according to the preamble of claim 1.

Such a method is known from EP-A-0639327. In this known method the milk production, independently of the lactation period, may be taken as a criterion for animal admission to the milk box. To this end, the milk yield of each animal is each time recorded in the memory of the computer system, and there are provided means to give preferential treatment in admitting animals to the milk box to animals having a higher average milk production than other animals, independently of the extent to which the lactation period has advanced. Nothing being said about the kind of criterion.

The present invention aims at answering the question whether an animal, after having presented itself again in the milking parlour or near thereto, is to be milked again, on the basis of parameters deviating from those in the aforementioned known method.

In accordance with the invention, for that purpose the method described in the preamble is characterized in that, the milk criterion is constituted in particular by the number of animals (p) that should at least have been milked since the last milking run of this animal, in order that the animal, after having presented itself again in the milking parlour or near thereto, is to be milked again.

It has already been proposed by the applicant in an earlier patent application only to milk an animal when since the previous milking run of this animal a minimum number of other animals have been milked. In this earlier application it has been indicated that this minimum number can be established individually per animal, depending on the extent to which the lactation period of the animal presenting itself in the milking parlour or near thereto has elapsed (see: PCT/NL95/00207).

In a concrete embodiment, this minimum number of animals (p) is a function of the relation (mₓ/m) between the quantity of milk (mₓ) supplied by one animal by means of the milking robot in the period of time (T) and the quantity of milk (m) supplied on average per animal over a group of animals in said period of time. The functional relation between the minimum number of animals (p) and the relation (mₓ/m) in an interval around the value p = 20 is approximately according to p = (6,94 - 2,47.mₓ/m)². In other words, whether an animal is to be milked again is individually determined for each animal depending on the quantity of milk supplied by this animal, e.g. in the last 24 hours, in relation to the quantity of milk supplied on average per animal over a group of animals - often constituted by the herd present with a farmer - in said period of time.

Besides to a method, the invention also relates to an implement for automatically milking animals which are allowed to walk around freely and to go to a milking parlour including a milking robot for being milked there, which implement is provided with an animal identification system and means for establishing the quantity of milk yielded from each individual animal. The implement comprises a computer equipped so as to define, on the basis of the quantity of milk supplied by one animal by means of the milking robot in a fixed period of time and the quantity of milk supplied on average per animal over a group of animals in said period of time, a milk criterion that has to be met in order that the animal, after animal, after having presented itself again in the milking parlour or near thereto, is to be milked again. The implement is characterized according to claim 5. The computer may additionally be equipped for executing the further aforementioned aspects of the method in accordance with the invention.

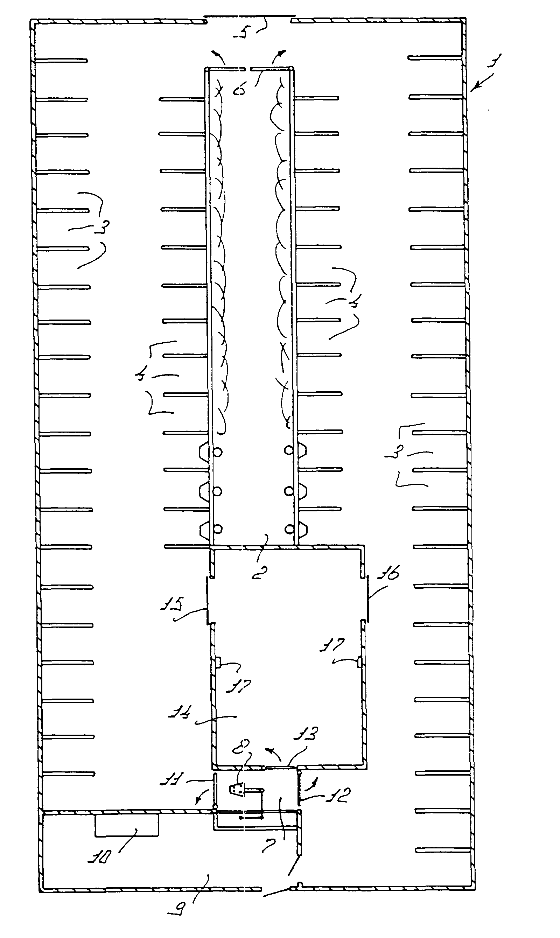

For a better understanding of the invention and to show how the same may be carried into effect, reference will now be made, by way of example, to the accompanying drawing showing schematically a milking parlour in which a milking robot is disposed.

In the drawing there is represented a loose house 1, in the longitudinal direction of which there is arranged a feed alley 2. At both sides of this feed alley 2, over almost the entire length of the loose house 1 at the sides of the exterior wall, there are provided cubicles 3, and, at the side of the feed alley 2, there are disposed feed stands 4. Via doors 5 and 6 in the cowshed 1, by means of a tractor driving in the feed alley 2, it will be possible to transport hay feed to feed grooves and/or concentrate to feed troughs in the feed stands 4. The arrangement of the cubicles 3 and the feed stands 4 is such that there remains sufficient walking room for the animals between the cubicles and the feed stands, so that they are allowed to move to a sufficient extent and, in principle, to walk around in the cowshed. Near the short side of the cowshed there is a milking parlour 7 where a machine for automatically milking animals is arranged, which milking machine is provided with a milking robot 8 for automatically connecting the teat cups to the teats of an animal, respectively disconnecting same therefrom. Between the milking parlour 7 and the short side of the cowshed 1 there is provided a computer room 9, in which there is arranged a computer 10 as well as all the equipment constituting part of the milking machine that is not accommodated in the milking parlour 7 itself. The milking parlour 7 is provided with an entrance door 11 and two exit doors 12 and 13. Via the door 11 animals can enter the milking parlour from the loose house, while the animals can return to the loose house from the milking parlour via the door 12. As soon as an animal enters the milking parlour from the loose house or from the meadow via the loose house, the identity of the animal is ascertained in a customary manner. By means of the animal identification system used therefor, there is obtained access to a data file present for this animal in the computer of the system. In said file there are inter alia recorded data which are relevant for answering the question whether or not the animal is to be milked.

Next to the milking parlour 7 there is provided a separation room 14, which is accessible from the milking parlour via the door 13. The separation room 14 is further accessible via doors 15 and 16. In the room 14 animals can be separated from those in the loose house of the cowshed 1, e.g. because they have an udder shape being such that the teat cups cannot be connected automatically, because they have to be inseminated or because their hoofs have to be cut, in which cases the farmer can bring the animals e.g. via the door 15 into the separation room 14, but also because mastitis has been diagnosed with the animals which are present in the milking parlour 7 and then are led from there via the door 13 into the separation room 14 instead of into the loose house of the cowshed 1. Into the separation room there may also be led the animals presenting themselves at the milking robot within a too short period of time after their last milking run, in particular when they are expected not having to stay there for a very long time prior to still being milked. The farmer can get animals out of the separation room 14 via the door 16. By means of the computer 10, which is used otherwise for the control of automatically milking and automatically connecting the teat cups to the teats respectively disconnecting same therefrom, as well as for executing any operations that might further be of importance for the milking, there can be recorded the number of animals which are led from the milking parlour 7 to the separation room 14. However, when the farmer himself leads animals via the door 15 into the separation room, or gets animals out of there, e.g. via the door 16, then the number of animals present in the separation room recorded in the computer 10 will not correspond with the reality. In order to avoid this drawback, there are available counting means 17 connected to the computer 10. These counting means are preferably disposed near the doors 15 and 16 and can manually be controlled by the farmer. When the farmer leads an animal via one of the doors 15, 16 into the separation room, he will be able, by controlling the counting means 17, to make the number of animals indicated thereby correspond with the reality. Likewise the farmer, when getting an animal out of the separation room 14 via one of the doors 15, 16, will be able, by controlling the counting means, to adapt the number of animals present in the separation room, so that, because the counting means 17 are connected to the computer 10, at all times the correct number of animals in the separation room is recorded in the computer 10 and indicated, if desired, on a display disposed on the counting means 17. When, in the absence of the farmer, too many animals are led from the milking parlour 7 to the separation room 14, it will be possible to put an alarm into operation for alerting the farmer that the number of animals in the separation room is too large.

As already pointed out, animals may present themselves in the milking parlour or near thereto, while they have already been milked recently. For that reason there has to be defined a milk criterion that has to be met in order that such an animal is then to be milked again. This milk criterion can be constituted by the number of animals (p) that should at least have been milked since the last milking run of this animal, in order that the animal, after having presented itself again in the milking parlour or near thereto, is to be milked again. This milk criterion can be defined on the basis of the quantity of milk (mₓ) supplied by one animal by means of the milking robot in a fixed period of time (T) and the quantity of milk (m) supplied on average per animal over a group of animals in said period of time (T). In particular, the milk criterion is defined on the basis of the relation (mₓ/m) between the quantity of milk (mₓ) supplied by one animal by means of the milking robot in the period of time (T) and the quantity of milk (m) supplied on average per animal over a group of animals in said period of time (T).

When starting from a situation of sixty cows which are to be milked three times per 24 hours, whereby each milking run takes approximately eight minutes, then it appears that, when the quantity of milk (mₓ) supplied by a specific animal corresponds to the quantity of milk (m) supplied on average per animal over the group of animals, it is desirable first to milk approximately 20 other animals before milking said specific animal again. A functional relation between the minimum number of animals (p) that have to be milked first between two consecutive milking runs of a specific animal and said relation (mₓ/m) is e.g. p = (6,94 - 2,47.mₓ/m)². This means that for high productive animals a smaller number of animals have to be milked prior to milking such a high productive animal again. For example, when a specific animal supplies 25% more milk than the average animal, so that mₓ/m = 1,25, then at least only eight animals will have to be milked prior to milking again this animal after same has presented itself in the milking parlour or near thereto. When a number of animals have been milked exceeding the calculated number (p) by a fixed value (n), or when certainly the greater part, e.g. 2/3, of the number of animals present have been milked, then an animal presenting itself again in the milking parlour or near thereto will be milked immediately, independently of the fact whether the production is high or low, so independently of the relation mₓ/m.

By means of this system of calculations of the minimum number of animals to be milked in the interval, whereby the individual animal is taken into account, there is obtained the advantage that high productive animals are better treated. They are earlier admitted to the milking parlour as long as they produce much milk and have automatically to wait longer when the milk production decreases in the course of the lactation period. Low productive cows can no longer harm the efficiency of the robot by occupying same unnecessarily, until e.g. four times per 24 hours. They are restricted to two or at the most three milking runs per 24 hours.

It is noticed that the invention is not restricted to the embodiment shown and the calculation example given here. In and around the point p = 20, the second-degree relation between p and mₓ/m can also be replaced by a suitable linear relation. Furthermore, in case of an other number of animals or an other duration of the milking run, there can be applied an adapted relation between p and mₓ/m.

## Claims

1. A method of automatically milking animals which are allowed to walk around freely and to go to a milking parlour including a milking robot and which, prior to possibly being milked, are automatically identified, in which method the moments when an animal has been milked and the quantity of milk supplied thereby by the animal are recorded and on the basis of the quantity of milk (mₓ) supplied by one animal by means of the milking robot in a fixed period of time (T) and the quantity of milk (m) supplied on average per animal over a group of animals in said period of time (T), there is defined a milk criterion that has to be met in order that this animal, after having presented itself again in the milking parlour or near thereto, is to be milked again, **characterized in that** the milk criterion is constituted by the number of animals (p) that should at least have been milked since the last milking run of this animal, in order that the animal, after having presented itself again in the milking parlour or near thereto, is to be milked again.

2. A method as claimed in claim 1, **characterized in that** this minimum number of animals (p) is a function of the relation (mₓ/m) between the quantity of milk (mₓ) supplied by one animal by means of the milking robot in the period of time (T) and the quantity of milk (m) supplied on average per animal over a group of animals in said period of time.

3. A method as claimed in claim 2, **characterized in that** the functional relation between the minimum number of animals (p) and the relation (mₓ/m) in an interval around the value p = 20 is approximately according to p = (6,94 - 2,47.mₓ/m)².

4. A method as claimed in any one of claims 1 to 3, **characterized in that**, when since the last milking run of an animal there have been milked a number of animals exceeding the calculated number (p) by a fixed value (n), the animal, after having presented itself again in the milking parlour or near thereto, is to be milked again, independently of the value of the relation (mₓ/m).

5. An implement for automatically milking animals which are allowed to walk around freely and to go to a milking parlour (7) including a milking robot (8) for being milked there, which implement is provided with an animal identification system and means for establishing the quantity of milk yielded from each individual animal, and with a computer (10) equipped so as to define, on the basis of the quantity of milk supplied by one animal by means of the milking robot in a fixed period of time and the quantity of milk supplied on average per animal over a group of animals in said period of time, a milk criterion that has to be met in order that the animal, after having presented itself again in the milking parlour (7) or near thereto, is to be milked again, **characterized in that** the milk criterion is constituted by the number of animals (p) that should at least have been milked since the last milking run of this animal, in order that the animal, after having presented itself again in the milking parlour or near thereto, is to be milked again.

6. An implement as claimed in claim 5 **characterized in that** the computer (10) is equipped for applying the method as claimed in any one of claims 1 to 4.

## Patentansprüche

1. Verfahren zum automatischen Melken von Tieren, die die Möglichkeit haben, frei umherzulaufen und zu einem Melkstand mit einem Melkroboter zu gehen, und die vor einem etwaigen Melken automatisch identifiziert werden, wobei bei dem Verfahren die Zeitpunkte, zu denen ein Tier gemolken wurde, und die dabei von dem Tier gelieferte Milchmenge aufgezeichnet werden und auf der Basis der Milchmenge (mₓ), die mittels des Melkroboters innerhalb eines festgelegten Zeitraumes (T) von einem Tier gewonnen wird, und der Milchmenge (m), die innerhalb des Zeitraumes (T) im Durchschnitt pro Tier von einer Gruppe von Tieren gewonnen wird, ein Melkkriterium festgelegt wird, das erfüllt werden muß, damit dieses Tier, nachdem es sich erneut bei oder nahe dem Melkstand eingefunden hat, wieder gemolken wird, **dadurch gekennzeichnet**, daß das Melkkriterium durch die Anzahl von Tieren (p) gebildet wird, die seit dem letzten Melkdurchgang dieses Tieres mindestens hätten gemolken werden sollen, damit das Tier, nachdem es sich erneut bei oder nahe dem Melkstand eingefunden hat, wieder gemolken wird.

2. Verfahren nach Anspruch 1,
**dadurch gekennzeichnet**, daß diese Mindestanzahl von Tieren (p) eine Funktion des Verhältnisses (mₓ/m) zwischen der Milchmenge (mₓ), die mittels des Melkroboters innerhalb des Zeitraumes (T) von einem Tier gewonnen wird, und der Milchmenge (m) ist, die innerhalb des Zeitraumes im Durchschnitt pro Tier von einer Gruppe von Tieren gewonnen wird.

3. Verfahren nach Anspruch 2,
**dadurch gekennzeichnet**, daß die funktionelle Beziehung zwischen der Mindestanzahl von Tieren (p) und dem Verhältnis (mₓ/m) in einem Bereich um den Wert p = 20 etwa lautet: p = (6,94 - 2,47 · mₓ/m)².

4. Verfahren nach einem der Ansprüche 1 bis 3,
**dadurch gekennzeichnet**, daß das Tier, nachdem es sich erneut bei oder nahe dem Melkstand eingefunden hat, unabhängig von dem Wert des Verhältnisses (mₓ/m) erneut zu melken ist, wenn seit dem letzten Melkdurchgang eines Tieres eine Anzahl von Tieren gemolken wurde, die die berechnete Anzahl (p) um einen festen Wert (n) überschreitet.

5. Vorrichtung zum automatischen Melken von Tieren, die die Möglichkeit haben, frei umherzulaufen und zu einem Melkstand (7) mit einem Melkroboter (8) zu gehen, um dort gemolken zu werden, wobei die Vorrichtung mit einem Tieridentifikationssystem sowie mit einer Vorrichtung zur Ermittlung der von jedem einzelnen Tier gewonnenen Milchmenge versehen ist sowie mit einem Computer (10), der dazu ausgelegt ist, auf der Basis der Milchmenge, die mittels des Melkroboters innerhalb eines festgelegten Zeitraumes von einem Tier gewonnen wird, und der Milchmenge, die innerhalb des Zeitraumes im Durchschnitt pro Tier von einer Gruppe von Tieren gewonnen wird, ein Melkkriterium festzulegen, das erfüllt werden muß, damit das Tier, nachdem es sich erneut bei oder nahe dem Melkstand (7) eingefunden hat, wieder gemolken wird,
**dadurch gekennzeichnet**, daß das Melkkriterium durch die Anzahl von Tieren (p) gebildet wird, die seit dem letzten Melkdurchgang dieses Tieres mindestens hätten gemolken werden sollen, damit das Tier, nachdem es sich erneut bei oder nahe dem Melkstand eingefunden hat, wieder gemolken wird.

6. Vorrichtung nach Anspruch 5,
**dadurch gekennzeichnet**, daß der Computer (10) dazu ausgelegt ist, das Verfahren nach einem der Ansprüche 1 bis 4 anzuwenden.

## Revendications

1. Procédé de traite automatique d'animaux qui peuvent marcher librement autour d'un box de traite incluant un robot de traite, et aller jusqu'à celui-ci, et qui, avant d'être de manière possible traits, sont identifiés automatiquement, procédé dans lequel les moments où un animal a été trait et la quantité de lait produite de la sorte par l'animal sont enregistrés, et sur la base de la quantité de lait (mₓ/m) produite par un animal par l'intermédiaire du robot de trait pendant une période de temps (T) fixée, et de la quantité de lait (m) produite en moyenne par animal d'un groupe d'animaux pendant ladite période de temps (T), on définit un critère de lait qui doit être satisfait pour que cet animal, après s'être présenté de lui-même à nouveau dans le box de traite ou à proximité de celui-ci, soit trait à nouveau, **caractérisé en ce que** le critère de lait est constitué par le nombre d'animaux (p) qui doivent au moins avoir été traits depuis le dernier tour de traite de cet animal, pour que l'animal, après s'être présenté de lui-même à nouveau dans le box de traite ou à proximité de celui-ci, soit trait à nouveau.

2. Procédé selon la revendication 1, **caractérisé en ce que** ce nombre minimum d'animaux (p) est fonction de la relation (mₓ) entre la quantité de lait (mₓ/m) produite par un animal par l'intermédiaire du robot de traite pendant la période de temps (T), et la quantité de lait (m) produite en moyenne par animal d'un groupe d'animaux pendant ladite période de temps (T).

3. Procédé selon la revendication 2, **caractérisé en ce que** la relation fonctionnelle entre le nombre minimum d'animaux (p) et la relation (mₓ/m) dans un intervalle situé autour de la valeur p = 20 est approximativement conforme à p = (6,94 - 2,47 (mₓ/m))².

4. Procédé selon l'une quelconque des revend ications 1 à 3, **caractérisé en ce que**, lorsque depuis le dernier tour de traite d'un animal, un nombre d'animaux dépassant le nombre calculé (p) d'une valeur fixe (n) a été trait, l'animal, après s'être présenté de lui-même à nouveau dans le box à traite ou à proximité de celui-ci, est trait à nouveau, indépendamment de la valeur de la relation (mₓ/m).

5. Installation de traite automatique d'animaux qui peuvent marcher librement autour d'un box de traite (7) incluant un robot de traite (8) et aller jusqu'à celui-ci pour y être trait, installation qui est munie d'un système d'identification d'animal et de moyens pour établir la quantité de lait produite à partir de chaque animal individuel, et muni d'un ordinateur (10) équipé de manière à définir, sur la base de la quantité produite par un animal par l'intermédiaire du robot de traite pendant une période de temps fixe, et de la quantité de lait produit en moyenne par animal d'un groupe d'animaux pendant ladite période de temps, un critère de lait qui doit être satisfait pour que l'animal, après s'être présenté de lui-même à nouveau dans le box de traite (7) ou à proximité de celui-ci, soit trait à nouveau, **caractérisée en ce que** le critère de lait est constitué par le nombre d'animaux (p) qui doit au moins avoir été trait depuis le dernier tour de traite de cet animal, pour que l'animal, après s'être présenté de lui-même à nouveau dans le box de traite à proximité de celui-ci, soit trait à nouveau.

6. Installation selon la revendication 5, **caractérisé en ce que** l'ordinateur (10) est équipé pour appliquer le procédé tel que défini dans l'une quelconque des revendications 1 à 4.
